# EUROPEAN PATENT SPECIFICATION

(11) **EP 2 170 987 B1**
(45) Date of publication and mention of the grant of the patent: **20.10.2010**
(21) Application number: 08770979.6
(22) Date of filing: 13.06.2008
(51) Int. Cl.: C08K 5/098

(54) **STABILIZED THERMOPLASTIC COPOLYESTERS**
STABILISIERTE THERMOPLASTISCHE COPOLYESTER
COPOLYESTERS THERMOPLASTIQUES STABILISÉS

(30) Priority: 19.07.2007 US 950675 P
(43) Date of publication of application: 07.04.2010
(73) Proprietor: Ticona LLC, Florence, KY 41042 (US)
(72) Inventor: MULHOLLAND, Bruce, M., Hebron, Kentucky 41048 (US)
(74) Representative: von Kreisler Selting Werner
(86) International application number: PCT/US2008/066875
(87) International publication number: WO 2009/012003

(56) References cited:
- EP-A- 0 953 595
- GB-A- 2 033 403
- US-A1- 2007 117 897
- DATABASE WPI Week 198219 Thomson Scientific, London, GB; AN 1982-38184E XP002496994 & JP 57 055955 A (MITSUBISHI CHEM IND LTD) 3 April 1982 (1982-04-03)

## Description

### Background of the Invention

Thermoplastic copolyesters are known to degrade when exposed to ultraviolet light. The degradative effect of ultraviolet light on polyester resins is typically evidenced by a distinct color change in the resin. That is, when exposed to ultraviolet light, the color of polyester resins usually changes from a white appearance to a grey or yellow appearance after time. Moreover, this color change usually occurs rapidly with the rate of color change in response to exposure to ultraviolet light thereafter decreasing over time. Recently, polyester elastomers have been used in automotive applications, i.e., as molded parts on the interior and/or exterior of an automobile. Needless to say, significant color change of the original molded polyester resin is unacceptable when used as a part for an automobile, particularly a part that is visible. To counteract the tendency of polyester resins to degrade upon exposure to ultraviolet light, a variety of UV-light stabilization systems have been proposed.

In U.S. Patent No. 4,185,003, for example, thermoplastic copolyetherester elastomers are stabilized against heat and light aging by incorporating into the copolyetherester an effective concentration of a phenolic antioxidant and a hindered amine photostabilizer. Japanese patent Publication No. 75/91652 discloses the use of a number of hindered piperidine type photostabilizers in combination with phenolic antioxidants in copolyetheresters. However, according to U.S. Patent No. 4,185,003, while improvements to photostabilization of the copolyetheresters is improved when the teaching of this Japanese Publication is followed, the heat-aging behavior is much poorer when the photostabilizer is present compared to performance in the absence of the photostabilizer (see, column 1, lines 30-45 of U.S. Patent No. 4,185,003).

U.S. Patent No. 4,136,090 suggests that copolyetheresters may be stabilized against oxidative degradation due to exposure to heat and light by incorporating into the polymer an effective concentration of a phenolic antioxidant and copolymerized hindered amine photostabilizer.

In U.S. Patent No. 4,340,718, copolyesters are rendered less susceptible to weathering by incorporating into the polyester resin a dimethyl and diethyl ester of p-methoxybenzylidenemalonic acid having monofunctional terminal ester forming groups or a difunctional comonomer.

U.S. Patent Nos. 4,355,155 and 4,405,749 each disclose segmented thermoplastic copolyester elastomers which may be stabilized against heat. For example, in U.S. Patent No. 4,355,155, such stabilizers may include phenols and their derivatives, amines and their derivatives, compounds containing both hydroxyl and amine groups, hydroxyazines, oximes, polymeric phenolic esters and salts of multivalent metals in which the metal is in its lower state (see column 3, lines 46-52), while in U.S. Patent No. 4,405,749, a particular triazine-based antioxidant (i.e., 3,5-di-tert-butyl-4-hydroxyhydrocinnamic acid triester with 1,3,5-tris-(2-hydroxyethyl)-s-triazine-2,4,6-(1H, 3H, 5H) trione) is disclosed as having superior thermal stability. Each of these patents also mention that additional stabilization against ultraviolet light may be obtained by compounding the copolyetheresters with various UV absorbers, such as substituted benzophenones or benzotriazoles (see, column 4, lines 1-3 of U.S. Patent No. 4,355,155; and column 4, lines 10-13 of U.S. Patent No. 4,405,749).

A three-way stabilization system for polyester elastomers is also known (see DuPont Elastomers Laboratory Technical Notes for Hytrel® polyester elastomer, Mar. 2, 1977). In essence this three-way system consists of equal parts of a phenolic antioxidant (tetrakis (methylene-3-(3,5-di-tert- butyl-4-hydroxyphenyl propionate) methane), a benzotriazole absorber (i.e., 2-3(3',5'-di-t-butyl-2'-hydroxyphenyl)-5-chlorobenzotriazole) and a hindered piperdine type compound (i.e., bis(2,2,6,6-tetramethyl-4-piperidinyl)sebacate). The presence of the latter piperdine type compound is, however, suggested to be an indispensable component.

U.S. Patent No. 5,032,631 discloses a weatherable copolyester that is stabilized with a triazine-based antioxidant and benzophenone. Although such polyesters are colorable and UV stable, they nevertheless tend to exhibit a reduction in toughness when formed into thin materials (e.g., films or monofilaments) and subjected to weathering.

In light of the above, a need currently exits for a thermoplastic copolyester elastomer that is capable of maintaining its color and toughness after exposure to weathering.

### Summary of the Invention

In accordance with one embodiment of the present invention, a stabilized polyester composition is disclosed that comprises a thermoplastic copolyester, a light stabilizer, an antioxidant, secondary amine, and a lubricant that includes a metal salt of a fatty acid having a chain length of from 22 to 38 carbon atoms. The lubricant constitutes from about 0.5 wt.% to about 10 wt.% of the composition. In one particular embodiment, the composition includes one or more hindered amines (e.g., high molecular weight compounds), benzotriazole UV absorbers, sterically hindered phenols (e.g., triazine-based phenol), organophosphorous compounds, secondary amines, and metal salts of a fatty acid having a chain length of from 22 to 38 carbon atoms.

Other features and aspects of the present invention are described in more detail below.

### Detailed Description of Representative Embodiments

Reference now will be made in detail to various embodiments of the invention, one or more examples of which are set forth below. Each example is provided by way of explanation, not limitation of the invention. In fact, it will be apparent to those skilled in the art that various modifications and variations may be made in the present invention without departing from the scope or spirit of the invention. For instance, features illustrated or described as part of one embodiment, may be used on another embodiment to yield a still further embodiment. Thus, it is intended that the present invention cover such modifications and variations.

Generally speaking, the present invention is directed to a thermoplastic copolyester composition that is able to maintain its color and mechanical strength after exposure to full weathering, e.g., ultraviolet energy, heat, humidity, etc. More specifically, a stabilizing system is employed in the composition that contains a mixture of one or more light stabilizers (e.g., hindered amines, UV absorbers, etc.), antioxidants (e.g., sterically hindered phenols, organophosphorous compounds, etc.), and secondary amines. By selectively controlling the type and concentration of the stabilizers, the present inventor has discovered that a composition may be formed that is generally resistant to color change and crazing (i.e., micro-crack formation) upon weathering. In addition to a stabilizing system, a processing stabilizer is also employed in the copolyester resin that includes a metal salt of a fatty acid having a chain length of greater than 22 carbon atoms. The present inventor has discovered that such stabilizers are particularly effective in reducing internal stresses during fiber or film formation and thereby minimizing brittleness of the resulting article. For example, a monofilament formed from the thermoplastic copolyester resin of the present invention may exhibit an elongation at break retention percentage of from about 85% to about 150% after exposure to a Xenon arc at 2000 kJ/m² in accordance with Test Method SAE J1960. Various embodiments of the present invention will now be described in more detail.

### I. Thermoplastic Copolyesters

Thermoplastic copolyesters are well-known in the art and may include copolyetheresters, linear and cyclic polyalkylene terephthalates (e.g., polyethylene terephthalate, polypropylene terephthalate, polybutylene terephthalate, and ethylene-1,4-cyclohexylene-dimethylene terephthalate). Copolyetheresters, for instance, generally include a multiplicity of recurring "long chain ester units" and "short chain ester units" joined head-to-tail through ester linkages.

The term "long chain ester units", as applied to units in the polymer chain of the thermoplastic copolyester elastomers, refers to the reaction product of a long chain glycol with a dicarboxylic acid. The long chain glycols are polymeric glycols having terminal (or as nearly terminal as possible) hydroxy groups and a number average molecular weight above about 400 and, preferably, from about 600 to about 6000. Useful long chain glycols typically include those derived from 1,2-alkylene oxides wherein the alkylene group contains 2 to about 10 carbon atoms, examples of which are ethylene oxide, 1,2-propylene oxide, 1,2-butylene oxide and 1,2-hexylene oxide. The useful long chain glycols are random or block copolymers of ethylene oxide and 1,2-propylene oxide. Preferred long chain glycols are poly(oxytetramethylene) glycols derived from tetrahydrofuran. A long chain glycol of particular interest is poly(oxytetramethylene) glycol having a number average molecular weight of about 600 to about 4000.

The term "dicarboxylic acid" as used herein is intended to include the condensation polymerization equivalents of dicarboxylic acids, i.e., their esters or ester forming derivatives, such as acid chlorides, anhydrides, or other derivatives which behave substantially like dicarboxylic acids in a polymerization reaction with a glycol. The dicarboxylic acids used in making the copolyester elastomers have molecular weights less than about 300. They can be aromatic, aliphatic or cycloaliphatic. These dicarboxylic acids can contain any substituent groups which do not interfere with the polymerization reaction. Examples of useful dicarboxylic acids are orthophthalic acid, isophthalic acid, terephthalic acid, bibenzoic acid, bis(p-carboxyphenyl)methane, p-oxy(p-carboxylphenyl)benzoic acid, ethylene bis(p-oxybenzoic acid), 1,5-naphthalene dicarboxylic acid, 2,7-naphthalene dicarboxylic acid, phenanthralene dicarboxylic acid, 4,4'-sulfonyl dibenzoic acid, and so forth, as well as C₁ -C₁₀ alkyl and other ring substituted derivatives thereof, such as halo, alkoxy or aryl derivatives. Hydroxy acids, such as p(β-hydroxyethoxy)benzoic acid, can also be used provided an aromatic dicarboxylic acid is also present. Additional useful dicarboxylic acids are succinic acid, glutaric acid, adipic acid, pimelic acid, suberic acid, azelaic acid, sebacic acid, oxalic acid, fumaric acid, 1,3- or 1,4-cyclohexane dicarboxylic acid, 4-cyclohexene-1,2-dicarboxylic acid, 2,2,3,3-tetramethylsuccinic acid, and so forth. Preferred dicarboxylic acids are aromatic acids containing 8-16 carbon atoms, the cyclohexane-dicarboxylic acids and adipic acids. Particularly preferred dicarboxylic acids are terephthalic acid and isophthalic acid or mixtures thereof. Mixtures containing terephthalic acid and isophthalic acid wherein from about 1 to about 20 wt.% of the mixture is isophthalic acid may be used when products of lower flexural modulus are desired.

The term "short chain ester units" as applied to units in the polymer chain refers to low molecular weight compounds or polymer chain units typically having molecular weights less than about 550. They are made by reacting a low molecular weight diol (molecular weight below about 250) with a dicarboxylic acid. Useful low molecular weight diols that react to form short chain ester units of the copolyester elastomers include such diols as ethylene glycol, propylene glycol, 1,4-butanediol, 1,4-butenediol, 1,6-hexamethylene glycol, dihydroxycyclohexane, cyclohexane dimethanol, resorcinol, hydroquinone, 1,5-dihydroxynaphthalene, bisphenol A and so forth. Equivalent ester forming derivatives of diols, e.g., ethylene oxide or propylene carbonate, are also useful. Preferred diols are 1,4-butanediol, and 1,4-butenediol, or mixtures of the two. Such a preferred mixture is one wherein about 10 to about 40 wt.%, most preferably about 20 to about 30 wt.%, of the mixture is 1,4-butenediol.

The aforementioned copolyester elastomers may be prepared by polymerizing with (a) one or more dicarboxylic acids or their equivalents, (b) one or more long-chain glycols, and (c) one or more low molecular weight diols. The polymerization reaction can be conducted by conventional procedures as, for example, in bulk or in a solvent medium which dissolves one or more of the monomers. The resulting segmented copolyesters may be comprised of a multiplicity of recurring long chain ester units and short chain ester units joined head to tail through ester linkages. The long chain ester units are represented by the structure:

O-G-C(O)-R-C(O)

and the short chain ester units are represented by the structure:

O-D-C(O)-R-C(O)

wherein,
G is a divalent radical remaining after the removal of the terminal hydroxyl groups from at least one long chain polymeric glycol having a molecular weight of at least about 600 and a melting point below about 55°C;
R is the divalent radical remaining after removal of carboxyl groups from an aromatic carboxylic acid independently selected from the group consisting of terephthalic acid, and mixtures of terephthalic acid and isophthalic acid; and
D is the divalent radical remaining after removal of hydroxyl groups from at least one low molecular weight diol comprising at least about 65 wt.% of 1,4-butanediol, wherein the short chain segments amount to between about 25 and about 95 wt.% of the copolyester and wherein about 50 to about 100 wt.% of the short chain ester units are identical. Of particular interest are segmented copolyesters having short chain segments units derived from 1,4-butanediol and terephthalic acid and long chain segments derived from terephthalic acid and poly(oxytetramethylene) glycol having a number average molecular weight of about 600 to about 4000.

The method for forming such thermoplastic copolyester is well known and is described in more detail in U.S. Patent Nos. 3,651,014 to Witsiepe, et al.; 4,355,155 to Nelson; 5,032,631 to Golder, et al.; and 5,731,380 to Golder, which are hereby incorporated herein in their entirety by reference thereto for all purposes. Thermoplastic copolyetheresters that are composed of long chain ether ester units of poly-tetrahydrofuran and terephthalic acid and short chain ester units of 1,4-butanediol and terephthalic acid are commercially available from Ticona LLC under the designation RITEFLEX®. Other suitable copolyester elastomers are available from E. I. Du Pont de Nemours and Company under the designation HYTREL®.

If desired, a variety of impact modifiers may also be blended with the polyester base resin to achieve a desired amount of impact resistance. Examples of such impact modifiers include core-shell graft copolymers, such as those described in U.S. Patent No. 3,864,428 to Nakamura, et al., which is incorporated herein in their entirety by reference thereto for all purposes.

The thermoplastic copolyesters typically constitutes from about 85 wt.% to about 99 wt.%, in some embodiments from about 90 wt.% to about 98 wt.%, and in some embodiments, from about 92 wt.% to about 97 wt.% of the stabilized polymer composition.

### II. Stabilizing System

The stabilizing system of the present invention employs a specific combination of a light stabilizer (e.g., hindered amine, benzotriazole, etc.), antioxidant (e.g., sterically hindered phenol, organophosphorous compound, etc.), and secondary amine to help provide a copolyester that is colorable and stable to ultraviolet radiation.

### A. Light Stabilizers

### i. Hindered Amines

Hindered amine light stabilizers ("HALS") may be employed in the stabilizing system to inhibit degradation of the copolyester and thus extend its durability. Suitable HALS compounds may be derived from a substituted piperidine, such as alkyl-substituted piperidyl, piperidinyl, piperazinone, alkoxypiperidinyl compounds, and so forth. For example, the hindered amine may be derived from a 2,2,6,6-tetraalkylpiperidinyl. Regardless of the compound from which it is derived, the hindered amine is typically an oligomeric or polymeric compound having a number average molecular weight of about 1,000 or more, in some embodiments from about 1000 to about 20,000, in some embodiments from about 1500 to about 15,000, and in some embodiments, from about 2000 to about 5000. Such compounds typically contain at least one 2,2,6,6-tetraalkylpiperidinyl group (e.g., 1 to 4) per polymer repeating unit.

Without intending to be limited by theory, it is believed that high molecular weight hindered amines are relatively thermostable and thus able to inhibit light degradation even after being subjected to extrusion conditions. One particularly suitable high molecular weight hindered amine has the following general structure: 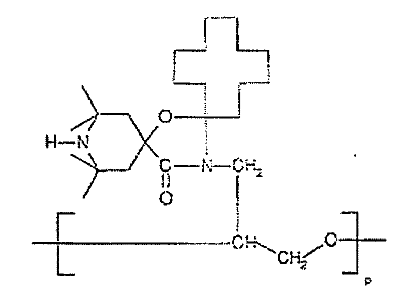 wherein, p is 4 to 30, in some embodiments 4 to 20, and in some embodiments 4 to 10. This oligomeric compound is commercially available from Clariant under the designation Hostavin® N30 and has a number average molecular weight of 1200.

Another suitable high molecular weight hindered amine has the following structure: 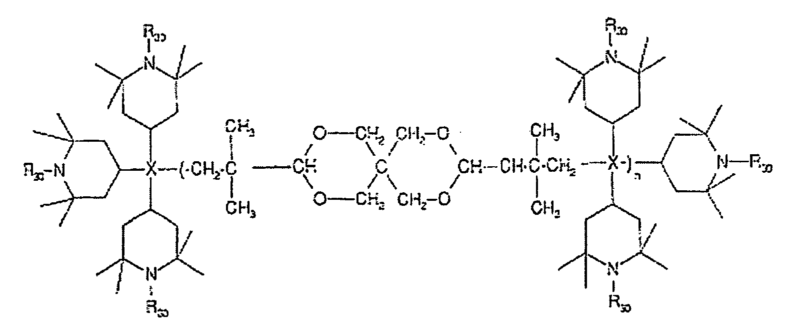 wherein, n is from 1 to 4 and R₃₀ is independently hydrogen or CH₃. Such oligomeric compounds are commercially available from Adeka Palmarole SAS (joint venture between Adeka Corp. and Palmarole Group) under the designation ADK STAB® LA-63 (R₃₀ is CH₃) and ADK STAB® LA-68 (R₃₀ is hydrogen).

Other examples of suitable high molecular weight hindered amines include, for instance, an oligomer of N-(2-hydroxyethyl)-2,2,6,6-tetramethyl-4-piperidinol and succinic acid (Tinuvin® 622 from Ciba Specialty Chemicals, MW = 4000); oligomer of cyanuric acid and N,N-di(2,2,6,6-tetramethyl-4-piperidyl)-hexamethylene diamine; poly((6-morpholine-S-triazine-2,4-diyl)(2,2,6,6-tetramethyl-4-piperidinyl)- iminohexamethylene-(2,2,6,6-tetramethyl-4-piperidinyl)-imino) (Cyasorb® UV 3346 from Cytec, MW = 1600); polymethylpropyl-3-oxy-[4(2,2,6,6-tetramethyl)-piperidinyl)-siloxane (Uvasil® 299 from Great Lakes Chemical, MW = 1100 to 2500); copolymer of α-methylstyrene-N-(2,2,6,6-tetramethyl-4-piperidinyl)maleimide and N-stearyl maleimide; 2,4,8,10-tetraoxaspiro[5.5]undecane-3,9-diethanol tetramethyl-polymer with 1,2,3,4-butanetetracarboxylic acid; and so forth. Still other suitable high molecular weight hindered amines are described in U.S. Patent Nos. 5,679,733 to Malik et al. and 6,414,155 to Sassi, et al., which are incorporated herein in their entirety by reference thereto for all purposes.

In addition to the high molecular hindered amines, low molecular weight hindered amines may also be employed in the stabilizing system of the present invention. Such hindered amines are generally monomeric in nature and have a molecular weight of about 1000 or less, in some embodiments from about 155 to about 800, and in some embodiments, from about 300 to about 800. Preferably the ratio of component a) to b) is 1:1 to 1:20, more preferably 1:1 to 1:10, most preferably 1:2 to 1:9, especially about 1:4.

Specific examples of such low molecular weight hindered amines may include, for instance, bis-(2,2,6,6-tetramethyl-4-piperidyl) sebacate (Tinuvin® 770 from Ciba Specialty Chemicals, MW = 481); bis-(1,2,2,6,6-pentamethyl-4-piperidinyl)-(3,5-ditert.butyl-4-hydroxybenzyl)butyl-propane dioate; bis-(1,2,2,6,6-pentamethyl-4-piperidinyl) sebacate; 8-acetyl-3-dodecyl-7,7,9,9-tetramethyl-1,3,8-triazaspiro-(4,5)-decane-2,4-dione; butanedioic acid-bis-(2,2,6,6-tetramethyl-4-piperidinyl) ester; tetrakis-(2,2,6,6-tetramethyl-4-piperidyl)-1,2,3,4-butane tetracarboxylate; 7-oxa-3,20-diazadispiro(5.1.11.2) heneicosan-20-propanoic acid, 2,2,4,4-tetramethyl-21-oxo, dodecyl ester; N-(2,2,6,6-tetramethyl-4-piperidinyl)-N'-amino-oxamide; o-t-amyl-o-(1,2,2,6,6-pentamethyl-4-piperidinyl)-monoperoxicarbonate; β-alanine, N-(2,2,6,6-tetramethyl-4-piperidinyl), dodecylester; ethanediamide, N-(1-acetyl-2,2,6,6-tetramethylpiperidinyl)-N'-dodecyl; 3-dodecyl-1-(2,2,6,6-tetramethyl-4-piperidinyl)-pyrrolidin-2,5-dione; 3-dodecyl-1-(1,2,2,6,6-pentamethyl-4-piperidinyl)-pyrrolidin-2,5-dione; 3-dodecyl-1-(1-acetyl,2,2,6,6-tetramethyl-4-piperidinyl)-pyrrolidin-2,5-dione; (Sanduvar® 3058 from Clariant, MW = 448.7); 4-benzoyloxy-2,2,6,6-tetramethylpiperidine; 1-[2-(3,5-di-tert-butyl-4-hydroxyphenylpropionyloxy)ethyl]-4-(3,5-di-tert-butyl-4-hydroxylphenyl propionyloxy)-2,2,6,6-tetramethyl-piperidine; 2-methyl-2-(2",2",6",6"-tetramethyl-4"-piperidinylamino)-N-(2',2',6',6'-tetra-methyl-4'-piperidinyl) propionylamide; 1,2-bis-(3,3,5,5-tetramethyl-2-oxo-piperazinyl) ethane; 4-oleoyloxy-2,2,6,6-tetramethylpiperidine; and combinations thereof. Other suitable low molecular weight hindered amines are described in U.S. Patent Nos. 5,679,733 to Malik, et al.

The hindered amines may be employed singularly or in combination in any amount to achieve the desired properties, but typically constitute from about 0.1 wt.% to about 4 wt.%, in some embodiments from about 0.2 wt.% to about 2 wt.%, and in some embodiments, from about 0.25 wt.% to about 1 wt.% of the stabilized polymer composition.

### ii. UV Absorbers

UV absorbers, such as benzotriazoles or benzopheones, may be employed to absorb ultraviolet light energy. Suitable benzotriazoles may include, for instance, 2-(2-hydroxyphenyl)benzotriazoles, such as 2-(2-hydroxy-5-methylphenyl)benzotriazole; 2-(2-hydroxy-5-tert-octylphenyl)benzotriazole (Cyasorb® UV 5411 from Cytec); 2-(2-hydroxy-3,5-di-tert-butylphenyl)-5-chlorobenzo-triazole; 2-(2-hydroxy-3-tert-butyl-5-methylphenyl)-5-chlorobenzotriazole; 2-(2-hydroxy-3,5-dicumylphenyl)benzotriazole; 2,2'-methylenebis(4-tert-octyl-6-benzo-triazolylphenol); polyethylene glycol ester of 2-(2-hydroxy-3-tert-butyl-5-carboxyphenyl)benzotriazole; 2-[2-hydroxy-3-(2-acryloyloxyethyl)-5-methylphenyl]-benzotriazole; 2-[2-hydroxy-3-(2-methacryloyloxyethyl)-5-tert-butylphenyl]benzotriazole; 2-[2-hydroxy-3-(2-methacryloyloxyethyl)-5-tert-octylphenyl]benzotriazole; 2-[2-hydroxy-3-(2-methacryloyloxyethyl)-5-tert-butylphenyl]-5-chlorobenzotriazole; 2-[2-hydroxy-5-(2-methacryloyloxyethyl)phenyl]benzotriazole; 2-[2-hydroxy-3-tert-butyl-5-(2-methacryloyloxyethyl)phenyl]benzotriazole; 2-[2-hydroxy-3-tert-amyl-5-(2-methacryloyloxyethyl)phenyl]benzotriazole; 2-[2-hydroxy-3-tert-butyl-5-(3-methacryloyloxypropyl)phenyl]-5-chlorobenzotriazole; 2-[2-hydroxy-4-(2-methacryloyloxymethyl)phenyl]benzotriazole; 2-[2-hydroxy-4-(3-methacryloyloxy-2-hydroxypropyl)phenyl]benzotriazole; 2-[2-hydroxy-4-(3-methacryloyloxypropyl)phenyl]benzotriazole; and combinations thereof.

Exemplary benzophenone light stabilizers may likewise include 2-hydroxy-4-dodecyloxybenzophenone; 2,4-dihydroxybenzophenone; 2-(4-benzoyl-3-hydroxyphenoxy) ethyl acrylate (Cyasorb® UV 209 from Cytec); 2-hydroxy-4-n-octyloxy)benzophenone (Cyasorb® 531 from Cytec); 2,2'-dihydroxy-4-(octyloxy)benzophenone (Cyasorb® UV 314 from Cytec); hexadecyl-3,5-bis-tert-butyl-4-hydroxybenzoate (Cyasorb® UV 2908 from Cytec); 2,2'-thiobis(4-tert-octylphenolato)-n-butylamine nickel(II) (Cyasorb® UV 1084 from Cytec); 3,5-di-tert-butyl-4-hydroxybenzoic acid, (2,4-di-tert-butylphenyl) ester (Cyasorb® 712 from Cytec); 4,4'-dimethoxy-2,2'-dihydroxybenzophenone (Cyasorb® UV 12 from Cytec); and combinations thereof.

When employed, UV absorbers may constitute from about 0.1 wt.% to about 4 wt.%, in some embodiments from about 0.2 wt.% to about 2 wt.%, and in some embodiments, from about 0.25 wt.% to about 1 wt.% of the entire stabilized polymer composition.

### B. Antioxidants

### i. Sterically Hindered Phenols

Sterically hindered phenolic antioxidant(s) may be employed in the stabilizing system. Examples of such phenolic antioxidants include, for instance, calcium bis(ethyl 3,5-di-tert-butyl-4-hydroxybenzylphosphonate) (Irganox® 1425); terephthalic acid, 1,4-dithio-,S,S-bis(4-tert-butyl-3-hydroxy-2,6-dimethylbenzyl) ester (Cyanox® 1729); triethylene glycol bis(3-tert-butyl-4-hydroxy-5-methylhydrocinnamate); hexamethylene bis(3,5-di-tert-butyl-4-hydroxyhydrocinnamate (Irganox® 259); 1,2-bis(3,5,di-tert-butyl-4-hydroxyhydrocinnamoyl)hydrazide (Irganox® 1024); 4,4'-di-tert-octyldiphenamine (Naugalube® 438R); phosphonic acid, (3,5-di-tert-butyl-4-hydroxybenzyl)-,dioctadecyl ester (Irganox® 1093); 1,3,5-trimethyl-2,4,6-tris(3',5'-di-tert-butyl-4'hydroxybenzyl)benzene (Irganox® 1330); 2,4-bis(octylthio)-6-(4-hydroxy-3,5-di-tert-butylanilino)-1,3,5-triazine (Irganox® 565); isooctyl 3-(3,5-di-tert-butyl-4-hydroxyphenyl)propionate (Irganox® 1135); octadecyl 3-(3,5-di-tert-butyl-4-hydroxyphenyl)propionate (Irganox® 1076); 3,7-bis(1,1,3,3-tetramethylbutyl)-10H-phenothiazine (Irganox® LO 3); 2,2'-methylenebis(4-methyl-6-tertbutylphenol)monoacrylate (Irganox® 3052); 2-tert-butyl-6-[1-(3-tert-butyl-2-hydroxy-5-methylphenyl)ethyl]-4-methylphenyl acrylate (Sumilizer® TM 4039); 2-[1-(2-hydroxy-3,5-di-tert-pentylphenyl)ethyl]-4,6-di-tert-pentylphenyl acrylate (Sumilizer® GS); 1,3-dihydro-2H-Benzimidazole (Sumilizer® MB); 2-methyl-4,6-bis[(octylthio)methyl]phenol (Irganox® 1520); N,N'-trimethylenebis-[3-(3,5-di-tert-butyl-4-hydroxyphenyl)propionamide (Irganox® 1019); 4-n-octadecyloxy-2,6-diphenylphenol (Irganox® 1063); 2,2'-ethylidenebis[4,6-di-tert-butylphenol] (Irganox® 129); N N'-hexamethylenebis(3,5-di-tert-butyl-4-hydroxyhyd rocinnamamide) (Irganox® 1098); diethyl (3,5-di-tert-butyl-4-hydroxybenxyl)phosphonate (Irganox® 1222); 4,4'-di-tert-octyldiphenylamine (Irganox® 5057); N-phenyl-1-napthalenamine (Irganox® L 05); tris[2-tert-butyl-4-(3-ter-butyl-4-hydroxy-6-methylphenylthio)-5-methyl phenyl] phosphite (Hostanox® OSP 1); zinc dinonyidithiocarbamate (Hostanox® VP-ZNCS 1); 3,9-bis[1,1-diimethyl-2-[(3-tert-butyl-4-hydroxy-5-methylphenyl)propionylox y]ethyl]-2,4,8,10-tetraoxaspiro[5.5]undecane (Sumilizer® AG80); tetrakis [methylene-(3,5-di-tertbutyl-4-hydroxycinnimate)]methane (Irganox® 1010); and ethylene-bis(oxyethylene)bis[3-(5-tert-butyl-4-hydroxy-m-tolyl)-propionate (Irganox® 245); and so forth.

Particularly suitable sterically hindered phenolic antioxidants for use in the stabilizing system of the present invention are triazine antioxidants having the following general formula: 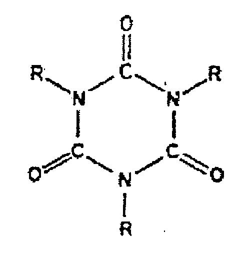 wherein, each R is independently a phenolic group, which may be attached to the triazine ring via a C₁ to C₅ alkyl or an ester substituent. Preferably, each R is one of the following formula (I)-(III):

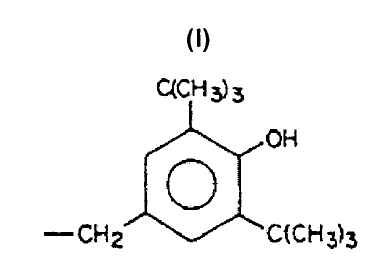

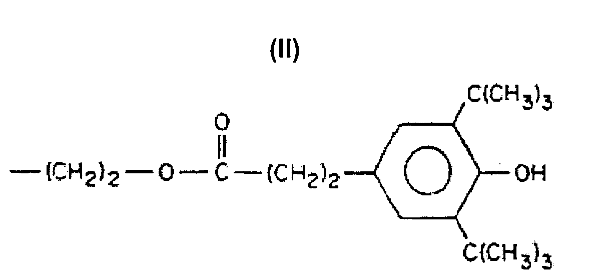

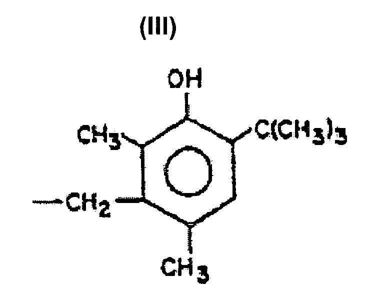

Commercially available examples of such triazine-based antioxidants may be obtained from American Cyanamid under the designation Cyanox® 1790 (wherein each R group is represented by the Formula III) and from Ciba Specialty Chemicals under the designations Irganox® 3114 (wherein each R group is represented by the Formula I) and Irganox® 3125 (wherein each R group is represented by the Formula II). Irganox® 3125, for example, is particularly suitable for use in the stabilizing system and is otherwise known as 3,5-di-tert-butyl-4-hydroxyhydrocinnamic acid triester with 1,3,5-tris(2-hydroxethyl)-s-triazine-2,4,6(1H, 3H, 5H)-trione.

Sterically hindered phenolic antioxidants may constitute from about 0.1 wt.% to about 3 wt.%, in some embodiments from about 0.2 wt.% to about 2 wt.%, and in some embodiments, from about 0.5 wt.% to about 1.5 wt.% of the entire stabilized polymer composition.

### ii. Organophosphorous Compounds

Organophosphorus compounds may also be employed in the stabilizing system that serve as secondary antioxidants to decompose peroxides and hydroperoxides into stable, non-radical products. Trivalent organophosphorous compounds (e.g., phosphites or phosphonites) are particularly useful in the stabilizing system of the present invention. Monophosphite compounds (i.e., only one phosphorus atom per molecule) may be employed in certain embodiments of the present invention. Preferred monophosphites are aryl monophosphites contain C₁ to C₁₀ alkyl substituents on at least one of the aryloxide groups. These substituents may be linear (as in the case of nonyl substituents) or branched (such as isopropyl or tertiary butyl substituents). Non-limiting examples of suitable aryl monophosphites (or monophosphonites) may include triphenyl phosphite; diphenyl alkyl phosphites; phenyl dialkyl phosphites; tris(nonylphenyl) phosphite (Weston™ 399, available from GE Specialty Chemicals); tris(2,4-di-tert-butylphenyl) phosphite (Irgafos® 168, available from Ciba Specialty Chemicals Corp.); bis(2,4-di-tert-butyl-6-methylphenyl) ethyl phosphite (Irgafos® 38, available from Ciba Specialty Chemicals Corp.); and 2,2',2"-nitrilo[triethyltris(3,3'5,5'-tetra-tert-butyl-1,1'-biphenyl-2,2'-diyl) phosphate (Irgafos® 12, available from Ciba Specialty Chemicals Corp.). Aryl diphosphites or diphosphonites (i.e., contains at least two phosphorus atoms per phosphite molecule may also be employed in the stabilizing system and may include, for instance, distearyl pentaerythritol diphosphite, diisodecyl pentaerythritol diphosphite, bis(2,4 di-tert-butylphenyl) pentaerythritol diphosphite (Ultranox™ 626, available from GE Specialty Chemicals); bis(2,6-di-tert-butyl-4-methylpenyl) pentaerythritol diphosphite; bisisodecyloxypentaerythritol diphosphite, bis(2,4-di-tert-butyl-6-methylphenyl) pentaerythritol diphosphite, bis(2,4,6-tri-tert-butylphenyl) pentaerythritol diphosphite, tetrakis(2,4-di-tert-butylphenyl)4,4'-biphenylene-diphosphonite (Sandostab™ P-EPQ, available from Clariant) and bis(2,4-dicumylphenyl)pentaerythritol diphosphite (Doverphos® S-9228).

Organophosphorous compounds may constitute from about 0.1 wt.% to about 2 wt.%, in some embodiments from about 0.2 wt.% to about 1 wt.%, and in some embodiments, from about 0.25 wt.% to about 0.5 wt.% of the stabilized polymer composition.

### C. Secondary Amines

In addition to those mentioned above, secondary amines may also be employed in the stabilizing system. The secondary amines may be aromatic in nature, such as N-phenyl naphthylamines (e.g., Naugard® PAN from Uniroyal Chemical); diphenylamines, such as 4,4'-bis(dimethylbenzyl)-diphenylamine (e.g., Naugard® 445 from Uniroyal Chemical); p-phenylenediamines (e.g., Wingstay® 300 from Goodyear); quinolones, and so forth. Particularly suitable secondary amines are oligomeric or polymeric amines, such as homo- or copolymerized polyamides. Examples of such polyamides may include nylon 3 (poly-β-alanine), nylon 6, nylon 10, nylon 11, nylon 12, nylon 6/6, nylon 6/9, nylon 6/10, nylon 6/11, nylon 6/12, polyesteramide, polyamideimide, polyacrylamide, and so forth. In one particular embodiment, the amine is a polyamide terpolymer having a melting point in the range from 120°C to 220°C. Suitable terpolymers may be based on the nylons selected from the group consisting of nylon 6, nylon 6/6, nylon 6/9, nylon 6/10 and nylon 6/12, and may include nylon 6-66-69; nylon 6-66-610 and nylon 6-66-612. One example of such a nylon terpolymer is a terpolymer of nylon 6-66-610 and is commercially available from Du Pont de Nemours under the designation Elvamide® 8063R. Still other suitable amine compounds are described in U.S. Patent Application Publication No. 2003/0060529 to Ho, et al., which is incorporated herein in its entirety by reference thereto for all purposes.

Secondary amines may constitute from about 0.1 wt.% to about 2 wt.%, in some embodiments from about 0.2 wt.% to about 1 wt.%, and in some embodiments, from about 0.3 wt.% to about 0.6 wt.% of the entire stabilized polymer composition.

### D. Other Stabilizers

If desired, other known stabilizers may also be incorporated into the stabilizing system, such as metal deactivators, acid stabilizers, other light stabilizers (e.g., benzophenones) or antioxidants, etc. Acid stabilizers, for instance, may help neutralize the acidic catalysts or other components present in the polymers. Suitable acid stabilizers may include zinc oxide, calcium lactate, natural and synthetic hydrotalcites, natural and synthetic hydrocalumites, and alkali metal salts and alkaline earth metal salts of higher fatty acids, such as calcium stearate, zinc stearate, magnesium stearate, sodium stearate, sodium ricinoleate and potassium palmitate. When employed, such acid stabilizers typically constitutes about 1.5 wt.% or less, in some embodiments, about 1 wt.% or less, and in some embodiments, from about 0.1 wt.% to about 0.5 wt.% of the polymer composition.

### III. Lubricant

In addition to a stabilizing system, the thermoplastic copolyester composition of the present invention also includes a lubricant that constitutes from about 0.5 wt.% to about 10 wt.%, in some embodiments from about 0.75 wt.% to about 8 wt.%, and in some embodiments, from about 1 wt.% to about 5 wt.% of the stabilized polymer composition. The lubricant is formed from a fatty acid salt derived from fatty acids having a chain length of from 22 to 38 carbon atoms, and in some embodiments, from 24 to 36 carbon atoms. Examples of such fatty acids may include long chain aliphatic fatty acids, such as montanic acid (octacosanoic acid), arachidic acid (arachic acid, icosanic acid, icosanoic acid, n-icosanoic acid), tetracosanoic acid (lignoceric acid), behenic acid (docosanoic acid), hexacosanoic acid (cerotinic acid), melissic acid (triacontanoic acid), erucic acid, cetoleic acid, brassidic acid, selacholeic acid, nervonic acid, etc. For example, montanic acid has an aliphatic carbon chain of 28 atoms and arachidic acid has an aliphatic carbon chain of 20 atoms. Due to the long carbon chain provided by the fatty acid, the lubricant has a high thermostability and low volatility. This allows the lubricant to remain functional during formation of the desired article (e.g., monofilaments) to reduce internal and external friction, thereby reducing the degradation of the material caused by mechanical/chemical effects.

The fatty acid salt may be formed by saponification of a fatty acid wax to neutralize excess carboxylic acids and form a metal salt. Saponification may occur with a metal hydroxide, such as an alkali metal hydroxide (e.g., sodium hydroxide) or alkaline earth metal hydroxide (e.g., calcium hydroxide). The resulting fatty acid salts typically include an alkali metal (e.g., sodium, potassium, lithium, etc.) or alkaline earth metal (e.g., calcium, magnesium, etc.). Such fatty acid salts generally have an acid value (ASTM D 1386) of about 20 mg KOH/g or less, in some embodiments about 18 mg KOH/g or less, and in some embodiments, from about 1 to about 15 mg KOH/g. Particularly suitable fatty acid salts for use in the present invention are derived from crude montan wax, which contains straight-chain, unbranched monocarboxylic acids with a chain length in the range of C₂₈-C₃₂. Such montanic acid salts are commercially available from Clariant GmbH under the designations Licomont® CaV 102 (calcium salt of long-chain, linear montanic acids) and Licomont® NaV 101 (sodium salt of long-chain, linear montanic acids).

If desired, fatty acid esters may be used in combination with the fatty acid salts. When employed, the molar ratio of the salts to esters is typically about 1:1 or greater, in some embodiments about 1.5 or greater, and in some embodiments, about 2:1 or greater. Fatty acid esters may be obtained by oxidative bleaching of a crude natural wax and subsequent esterification of the fatty acids with an alcohol. The alcohol typically has 1 to 4 hydroxyl groups and 2 to 20 carbon atoms. When the alcohol is multifunctional (e.g., 2 to 4 hydroxyl groups), a carbon atom number of 2 to 8 is particularly desired. Particularly suitable multifunctional alcohols may include dihydric alcohol (e.g., ethylene glycol, propylene glycol, butylene glycol, 1,3-propanediol, 1,4-butanediol, 1,6-hexanediol and 1,4-cyclohexanediol), trihydric alcohol (e.g., glycerol and trimethylolpropane), tetrahydric alcohols (e.g., pentaerythritol and erythritol), and so forth. Aromatic alcohols may also be suitable, such as o-, m- and p-tolylcarbinol, chlorobenzyl alcohol, bromobenzyl alcohol, 2,4-dimethylbenzyl alcohol, 3,5-dimethylbenzyl alcohol, 2,3,5-cumobenzyl alcohol, 3,4,5-trimethylbenzyl alcohol, p-cuminyl alcohol, 1,2-phthalyl alcohol, 1,3-bis(hydroxymethyl)benzene, 1,4-bis(hydroxymethyl)benzene, pseudocumenyl glycol, mesitylene glycol and mesitylene glycerol. Particularly suitable fatty acid esters for use in the present invention are derived from montanic waxes. Licowax® OP (Clariant), for instance, contains montanic acids partially esterified with butylene glycol and montanic acids partially saponified with calcium hydroxide. Thus, Licowax® OP contains a mixture of montanic acid esters and calcium montanate. Other montanic acid esters that may be employed include Licowax® E, Licowax® OP, and Licolub® WE 4 (all from Clariant), for instance, are montanic esters obtained as secondary products from the oxidative refining of raw montan wax. Licowax® E and Licolub® WE 4 contains montanic acids esterified with ethylene glycol or glycerine. Still other suitable montan wax derivatives may be described in U.S. Patent No. 5,096,951, as well as in U.S. Patent Application Publication Nos. 2007/0073007; 2006/0100330; and 2004/0254280, all of which are incorporated herein in their entirety by reference thereto for all purposes.

Other known waxes may also be employed in the lubricant of the present invention. Amide waxes, for instance, may be employed that are formed by reaction of a fatty acid with a monoamine or diamine (e.g., ethylenediamine) having 2 to 18, especially 2 to 8, carbon atoms. For example, ethylenebisamide wax, which is formed by the amidization reaction of ethylene diamine and a fatty acid, may be employed. The fatty acid may be in the range from C₁₂ to C₃₀, such as from stearic acid (C₁₈ fatty acid) to form ethylenebisstearamide wax. Ethylenebisstearamide wax is commercially available from Lonza, Inc. under the designation Acrawax® C, which has a discrete melt temperature of 142°C. Other ethylenebisamides include the bisamides formed from lauric acid, palmitic acid, oleic acid, linoleic acid, linolenic acid, oleostearic acid, myristic acid and undecalinic acid. Still other suitable amide waxes are N-(2-hydroxyethyl)12-hydroxystearamide and N,N'-(ethylene bis)12-hydroxystearamide, which are commercially available from CasChem, a division of Rutherford Chemicals LLC, under the designations Paricin® 220 and Paricin® 285, respectively.

### IV. Thermoplastic Article

The stabilized thermoplastic copolyester of the present invention may be formed into a variety of different thermoplastic articles using techniques known in the art. The additives of the stabilizing system and/or lubricant may be blended together prior to mixture with the copolyester. Alternatively, the additives may be independently combined with the copolyester. Any known blending technique may be employed, such as by dry-blending in a Henschel® mixer and thereafter melt processing the composition, such as by injection molding, blow molding, calendaring, extruding, melt blowing, spinning, etc. Melt processed articles that may be formed in the present invention include sheets, films, fibers, filaments, etc. as is well known in the art. Thermoplastic monofilaments, for example, may be knit, woven, or formed as a nonwoven web to yield a fabric, such as a support fabric for seating (e.g., automobile, buses, trains, aircraft, etc.), bedding, and so forth by conventional fabricating methods. In one embodiment, for example, a warp knit fabric may be formed by knitting oriented monofilaments in one or more than one diameter, alone or with one or more than one type of multifilament yarn (yarn). The monofilaments typically lie in one direction, while the yarn lies in a direction perpendicular to the monofilaments. Standard weaving and knitting techniques can be used to prepare such support fabrics. Other suitable monofilament constructions are described in U.S. Patent No. 5,985,961 to Dailey, et al., which is incorporated herein in its entirety by reference thereto for all purposes.

Regardless of the manner in which it is employed, however, articles formed from the stabilized copolyester can retain their color and mechanical properties even after weathering. For example, a monofilament formed from the thermoplastic copolyester resin of the present invention may exhibit an aged elongation at break (i.e., after exposure to a Xenon arc at 2000 kJ/m² in accordance with Test Method SAE J1960) that is from about 85% to about 150%, in some embodiments from about 87% to about 145%, and in some embodiments, from about 90% to about 130% of the unaged elongation at break. Such properties may also be achieved after exposure at 3000 kJ/m². Further, the present inventor has discovered that such excellent mechanical properties are even obtainable for thin articles (e.g., monofilaments), such as those having a thickness (e.g., diameter) of from about 10 to about 2000 micrometers, in some embodiments from about 100 to about 1000 micrometers, and in some embodiments, from about 300 to about 800 micrometers.

The present invention may be better understood with reference to the following examples.

### EXAMPLES

### Additives Employed

The following additives were employed in the examples.

| Designation | Chemical | Trade Name | Supplier |
|---|---|---|---|
| UVA-1 | 2-(2Hydroxy-5-tert-octylphenyl) benzotriazole | Cyasorb® UV5411 | Cytec |
| HALS-1 | bis(2,2,6,6-Tetramethyl-4- piperidinyl) sebacate | Tinuvin® 770 | Ciba Specialty Chemicals |
| HALS-2 | 7-Oxa-3,20-diazadispiro[5.1.11.2]heneicosan-21-one, 2,2,4,4-tetramethyl-20-(oxiranylmethyl), homopolymer | Hostavin® N30 | Clariant |
| HALS-3 | Mixed ester of 1,2,3,4-butanetetra-carboxylic acid, 1,2,2,6,6-pentamethyl-4-piperidinol and 3,9-bis(2-hydroxy-1,1-dimethylethyl)-2,4,8,10-tetraoxaspiro[5,5]undecane | ADK Stab LA-63 | Amfine |
| AO-1 | 3,5-Di-(tert)-butyl-4-hydroxyhydrocinnamic acid, triester with 1,3,5-tris(2-hydroxyethyl)-(s)-triazine-2,4,6(1H,3H,5H)-trione | Irganox® 3125 | Ciba Specialty Ciba Specialty Chemicals |
| AO-2 | Phosphorous Trichloride, Reaction Products with 1,1'-Biphenyl and 2,4-bis(1,1-dimethylethyl)phenol | Sandostab™ P-EPQ | Clariant |
| AO-3 | tris{2-tert.butyl-4-thio(2'methyl-4'hydroxy-5'tert.butylrphenyl-5-methyl)phenylphosphite | Hostanox® OSP-1 | Clariant |
| AO-4 | N,N'-hexane-1,6-diylbis[3-(3,5-di-tert-butyl-4-hydroxyphenylpropionamide] | Irganox® 1098 | Ciba Specialty Chemicals |
| AO-5 | 1,3,5-Trimethyl-2,4,6-tris (3,5-di-tert-butyl-4-hydroxybenzyl) benzene | Irganox® 1330 | Ciba Specialty Chemicals |
| AO-6 | Tris(2,4-di-(tert)-butylphenyl)phosphate | Irgafos® 168 | Ciba Specialty Chemicals |
| AO-7 | 1,6-Hexamethylene bis(3,5-di-(tert)-butyl-4-hydroxyhydrocinnamate) | Irganox® 259 | Ciba Specialty Chemicals |
| AO-8 | Triethyleneglycol bis[3-(3-(tert)-butyl-4-hydroxy-5-methylphenyl)propionate] | Irganox® 245 | Ciba Specialty Chemicals |
| AO-9 | Tetra kis[methylene(3,5-di-(tert)-butyl-4-hydroxyhydrocinnamate)]methane | Irganox® 1010 | Ciba Specialty Chemicals |
| AM-1 | Nylon multipolymer resin | Elvamide® 8063R | DuPont |
| AM-2 | 4,4'Di(α,α-dimethylbenzyl)diphenylamine | Naugard® 445 | Crompton |
| LUBE-1 | N,N'-Ethylenebisstearamide | Acrawax® C | Lonza |
| LUBE-2 | Ester of montanic acids with multifunctional Ester of montanic acids with multifunctional alcohols | Licolub® WE 4P | Clariant |
| LUBE-3 | Methyl hydroxystearate | Paricin® 1 | Caschem |
| LUBE-4 | N,N'ethylene-bis-l2hydroxystearamide | Paricin® 285 | Caschem |
| LUBE-5 | Polymer ester of long chain alcohol, pastilles | Armowax® W-440 | Akzo Nobel |
| LUBE-6 | Calcium salt of montanic acid (linear, aliphatic C₂₄-C₃₆ monocarboxylic acid (CAS No. 68308-22-5) | Licomont® CaV 102 | Clariant |
| LUBE-7 | Sodium salt of montanic acid (linear, aliphatic C₂₄-C₃₆ monocarboxylic acid (CAS No. 93334-05-5) | Licomont® NaV 101 | Clarian |
| LUBE-8 | Magnesium stearate | - | Norac |

### Test Methods

The following test methods were employed in the examples.

### Accelerated Weathering Test:

Accelerated weathering was performed according to the standard test method SAE J1960 issued by The Society of Automotive Engineers. More specifically, a controlled irradiance water-cooled Xenon arc apparatus fitted with a quartz inner filter and borosilicate outer filter (accelerated sunlight) was used to weather samples at 250 kJ/m²; 500 kJ/ₘ²; 1,000 kJ/m²; 1,500 kJ/m²; 2,000 kJ/m²; 2,500 kJ/m²; or 3,000 kJ/m².

### Tensile Strength:

Tensile strength and elongation at break measurements were determined using ASTM D638 (ISO 527) for injection molded specimens, or ASTM D2256 for monofilament samples. Actual values after exposure, or property retention after exposure expressed as a percent of the unexposed value, were reported. That is, the property retention was calculated by dividing the exposed value by the unexposed value, and then multiplying by 100. Samples were tested at room temperature conditions.

### COMPARATIVE EXAMPLE 1

Samples were formed from a combination of a thermoplastic copolyesterether elastomer (Riteflex® from Ticona LLC) and various light stabilizers. The samples were subjected to accelerated weathering (up to 1000 kJ/m²) as described above and thereafter tested for crazing (micro-crack formation). The results are set forth below:

| Ingredient | Control 1 | A-1 | A-2 |
|---|---|---|---|
| Riteflex® polymer | 97.55 % | 96.56 % | 96.56 % |
| Colorants | 0.66 % | 0.66 % | 0.66 % |
| UVA-1 | 0.50 % | 1.00 % | 1.00 % |
| HALS-1 | 0.50 % | - | - |
| HALS-2 | - | 1.00 % | 0.50 % |
| HALS-3 | - | - | 0.50 % |
| AO-1 | 0.79 % | 0.78 % | 0.78 % |
| Crazing at 1000 kJ/m² | Moderate | Moderate | None |

* This composition is commercially available from Ticona, LLC under the designation Riteflex® RKX-106.

As indicated above, Sample A-2 exhibited no crazing or visible color change. Sample A-2 was then prepared in three (3) colors for monofilament extrusion. All colors failed elongation at break requirement after 500 kJ/m² of testing.

### COMPARATIVE EXAMPLE 2

Samples from Example 1 (i.e., Sample A-2) were combined with various antioxidants. Small tensile bars (1BA, 2 mm thick) were molded and subjected to accelerated weathering (up to 2000 kJ/m²) as described above and thereafter tested for tensile properties (elongation retention, tensile at break), crazing (micro-crack formation), and color change. The results are set forth below:

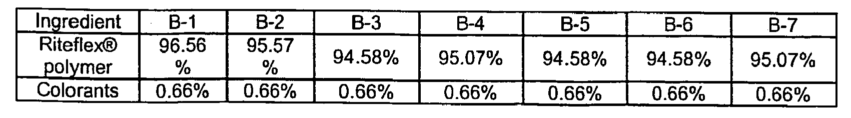

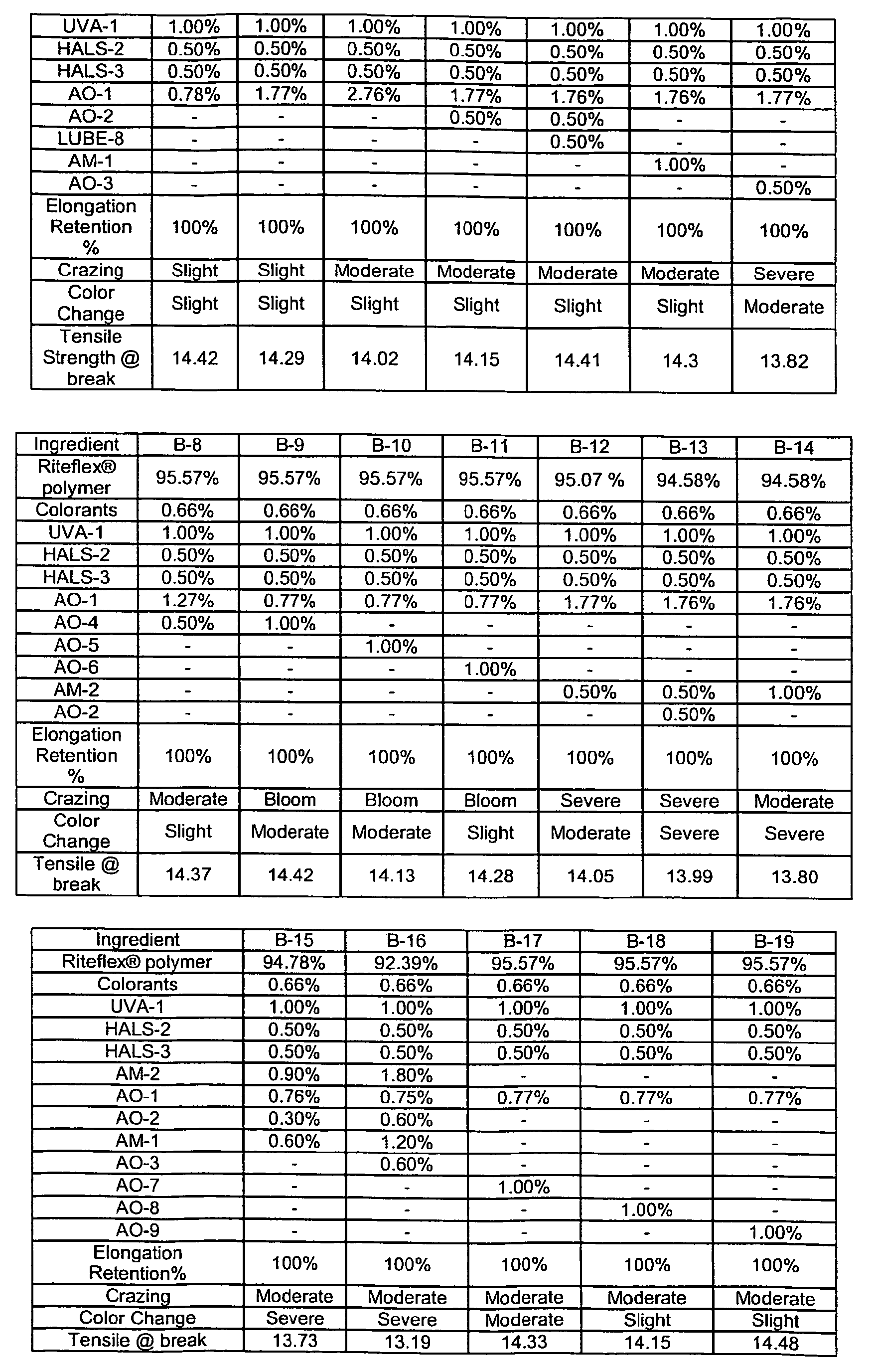

As indicated, the molded specimens (2 mm thick) exhibited no difference in the elongation at break retention after 2,000 kJ/m².

### COMPARATIVE EXAMPLE 3

Samples from Example 2 were combined with various lubricants. In this set of experiments, the samples were extruded through a laboratory monofilament device so that thinner sections could be formed. The extrudate was pulled from the device to achieve a thickness similar to a monofilament. The monofilament samples were subjected to accelerated weathering as described above and thereafter tested for tensile strength (elongation retention). The results are set forth below:

| Ingredient | C-1 | C-2 | C-3 | C-4 | C-5 |
|---|---|---|---|---|---|
| Riteflex® polymer | 96.56% | 94.48% | 93.49% | 93.49% | 93.49% |
| Colorants | 0.66% | 0.66% | 0.66% | 0.66% | 0.66% |
| UVA-1 | 1.00% | 1.00% | 1.00% | 1.00% | 1.00% |
| HALS-2 | 0.50% | 0.50% | 0.50% | 0.50% | 0.50% |
| HALS-3 | 0.50% | 0.50% | 0.50% | 0.50% | 0.50% |
| AO-1 | 0.78% | 1.76% | 1.75% | 1.75% | 1.75% |
| AO-2 | - | 0.50% | 0.50% | 0.50% | 0.50% |
| AM-1 | - | 0.60% | 0.60% | 0.60% | 0.60% |
| LUBE-1 | - | - | 1.00% | - | - |
| LUBE-2 | - | - | - | 1.00% | - |
| LUBE-3 | - | - | - | - | 1.00% |
| Elongation Retention% @ 250 kJ/m² | 76.8% | 73.5% | 75.7% | 79.3% | 81.6% |

Testing stopped at only 250 kJ/m² as all samples failed elongation at break retention requirements.

### COMPARATIVE EXAMPLE 4

Samples from Example 2 were combined with various lubricants. As in Example 3, the samples were extruded through a laboratory monofilament device so that thinner sections could be formed. The extrudate was pulled from the device to achieve a thickness similar to a monofilament. The samples were subjected to accelerated weathering as described above and thereafter tested for tensile strength (elongation at break, elongation retention). The results are set forth below:

| Ingredient | D-1 | D-2 | D-3 | D-4 | D-5 | D-6 | D-7 | D-8 | D-9 |
|---|---|---|---|---|---|---|---|---|---|
| Riteflex® polymer | 94.48 % | 93.49 % | 92.49 % | 93.49 % | 92.49 % | 93.49 % | 92.49 % | 93.49 % | 92.49 % |
| Colorants | 0.66% | 0.66% | 0.66% | 0.66% | 0.66% | 0.66% | 0.66% | 0.66% | 0.66% |
| UVA-1 | 1.00% | 1.00% | 1.00% | 1.00% | 1.00% | 1.00% | 1.00% | 1.00% | 1.00% |
| HALS-2 | 0.50% | 0.50% | 0.50% | 0.50% | 0.50% | 0.50% | 0.50% | 0.50% | 0.50% |
| HALS-3 | 0.50% | 0.50% | 0.50% | 0.50% | 0.50% | 0.50% | 0.50% | 0.50% | 0.50% |
| AO-1 | 1.76% | 1.75% | 1.75% | 1.75% | 1.75% | 1.75% | 1.75% | 1.75% | 1.75% |
| AO-2 | 0.50% | 0.50% | 0.50% | 0.50% | 0.50% | 0.50% | 0.50% | 0.50% | 0.50% |
| AM-1 | 0.60% | 0.60% | 0.60% | 0.60% | 0.60% | 0.60% | 0.60% | 0.60% | 0.60% |
| LUBE-2 | - | 1.00% | 2.00% | - | - | - | - | - | - |
| LUBE-3 | - | - | - | 1.00% | 2.00% | - | - | - | - |
| LUBE-4 | - | - | - | - | - | 1.00% | 2.00% | - | - |
| LUBE-5 | | | | | | | - | 1.00% | 2.00% |
| Elongation Retention % | 41.8% | 2.3% | 27.3% | 34.5% | 12.6% | 34.6% | 21.4% | - | - |

None of the samples with lubricants achieved the desired elongation at break retention.

### EXAMPLE 1

Samples of the invention and a control sample were prepared in various colors and formed into monofilament using a commercial extrusion process. The samples were subjected to accelerated weathering as described above and thereafter tested for tensile strength (elongation retention). The results are set forth below:

| Ingredient | Control 1* Tan | D-11 Tan | D-12 Tan | D-13 Gray | D-14 Black |
|---|---|---|---|---|---|
| Riteflex® polymer | 97.55% | 92.49% | 94.53% | 92.55% | 91.16 % |
| Colorants | 0.66% | 0.66 % | 0.66 % | 0.60 % | 2.00 % |
| UVA-1 | 0.50% | 1.00 % | 0.50 % | 1.00 % | 1.00 % |
| HALS-1 | 0.50% | - | - | - | - |
| HALS-2 | - | 0.50 % | 0.25 % | 0.50 % | 0.50 % |
| HALS-3 | - | 0.50 % | 0.25 % | 0.50 % | 0.50 % |
| AO-1 | 0.79% | 1.75 % | 1.26% | 1.75 % | 1.74 % |
| AO-2 | - | 0.50 % | 0.25 % | 0.50 % | 0.50 % |
| AM-1 | - | 0.60 % | 0.30 % | 0.60 % | 0.60 % |
| LUBE-6 | - | 2.00 % | 2.00 % | - | - |
| LUBE-7 | - | - | - | 2.00 % | 2.00 % |
| Elongation Retention% (2000 kJ/m²) | 83.8% | 100.4% | 131.6% | 103.2% | 127.4% |
| Elongation Retention% (3000 kJ/m²) | 63.1 % | 128.9% | 134.2% | 92.2% | 138.0% |

| | | | | | |
|---|---|---|---|---|---|
| * This composition is commercially available from Ticona, LLC under the designation Riteflex® RKX-106. | | | | | |

## Claims

1. A stabilized polyester composition comprising:
a thermoplastic copolyester;
a light stabilizer;
an antioxidant;
a secondary amine; and
a lubricant that includes a metal salt of a fatty acid having a chain length of from 22 to 38 carbon atoms, wherein the lubricant constitutes from 0.5 wt.% to 10 wt.% of the composition.

2. The stabilized polyester composition of claim 1, wherein the metal salt of fatty acid is an alkali metal salt, an alkaline earth metal salt, or a combination and said fatty acid has a chain length of from 24 to 36 carbon atoms.

3. The stabilized polyester composition of claim 2, wherein the metal salt is a sodium salt of montanic acid, a calcium salt of montanic acid, or a combination thereof.

4. The stabilized polyester composition of claim 1 wherein the lubricant further comprises a fatty acid ester, wherein the molar ratio of the metal salt to the ester is 1:1 or greater.

5. The stabilized polyester composition of any of the foregoing claims, wherein the lubricant constitutes from 1 wt.% to 5 wt.% of the composition.

6. The stabilized polyester composition of any of the foregoing claims, wherein the copolyester is a copolyetherester.

7. The stabilized polyester composition of any of the foregoing claims, wherein the light stabilizer is an oligomeric hindered amine, a polymeric hindered amine, or a combination.

8. The stabilized polyester composition of claim 7, wherein the light stabilizer inclucles a hindered amine having a number average molecular weight of 1,000 or more.

9. The stabilized polyester composition of claim 7, wherein the light stabilizer is an oligomeric hindered amine having the following structure: 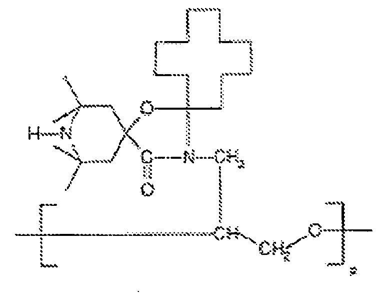 wherein, p is 4 to 30.

10. The stabilized polyester composition of claim 7, wherein the light stabilizer is an oligomeric hindered amine having the following structure: 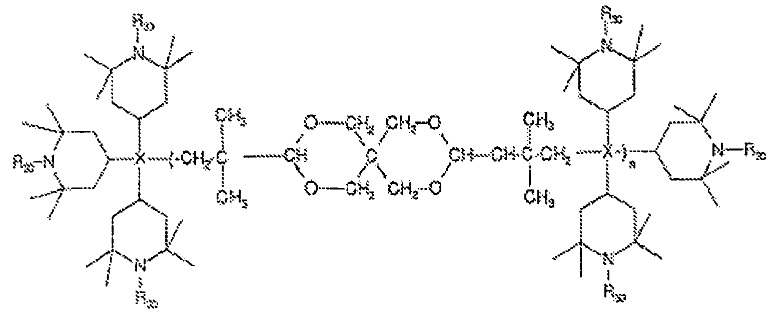 wherein, n is from 1 to 4 and R₃₀ is hydrogen or CH₃.

11. The stabilized polyester composition of claim 1, containing as the light stabilizer a benzotriazole and as antioxidant a sterically-hindered phenol that includes a triazine compound having the following structure: 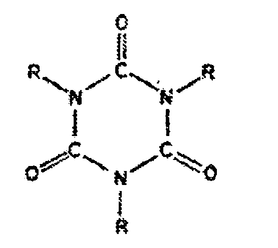 wherein, each R is independently a phenolic group, which may be attached to the ring via a C₁ to C₅ alkyl or an ester substituent.

12. The stabilized polyester composition of claim 11, wherein R has the following structure:

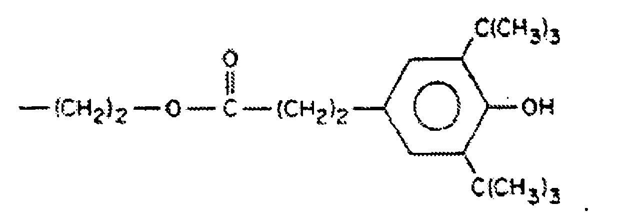

13. The stabilized polyester composition of claim 12, wherein the antioxidant further includes an orgonophosphorous compound wherein said antioxidant is aryl disphosphite, aryl diphosphonite, or a combination thereof.

14. The stabilized polyester composition of claim 13, wherein the antioxidant includes bis(2,4,6-tri-tert-butylphenyl) pentaerythritol diphosphite, tetrakis(2,4-di-tert-butylphenyl)4,4'-biphenylene-diphosphonite, or a combination thereof.

15. A film, sheet, fiber or filament article formed from the stabilized polyester composition of any of the foregoing claims, wherein the article exhibits an elongation at break after exposure to a Xenon arc at 2000 kJ/m² in accordance with Test Method SAE J1960 of from 85% to 150% of the article's unexposed elongation at break.

## Patentansprüche

1. Stabilisierte Polyesterzusammensetzung, umfassend:
einen thermoplastischen Copolyester;
einen Lichtstabilisator;
ein Antioxidans;
ein sekundäres Amin; und
ein Gleitmittel, das ein Metallsalz einer Fettsäure mit einer Kettenlänge von 22 bis 38 Kohlenstoffatomen umfasst, wobei das Gleitmittel 0,5 Gew.-% bis 10 Gew.-% der Zusammensetzung ausmacht.

2. Stabilisierte Polyesterzusammensetzung gemäß Anspruch 1, wobei das Metallsalz der Fettsäure ein Alkalimetallsalz, ein Erdalkalimetallsalz oder eine Kombination davon ist und die Fettsäure eine Kettenlänge von 24 bis 36 Kohlenstoffatomen hat.

3. Stabilisierte Polyesterzusammensetzung gemäß Anspruch 2, wobei das Metallsalz ein Natriumsalz von Montansäure, ein Calciumsalz von Montansäure oder eine Kombination davon ist.

4. Stabilisierte Polyesterzusammensetzung gemäß Anspruch 1, wobei das Gleitmittel weiterhin einen Fettsäureester umfasst, wobei das Stoffmengenverhältnis des Metallsalzes zu dem Ester 1:1 oder mehr beträgt.

5. Stabilisierte Polyesterzusammensetzung gemäß einem der vorstehenden Ansprüche, wobei das Gleitmittel 1 Gew.-% bis 5 Gew.-% der Zusammensetzung ausmacht.

6. Stabilisierte Polyesterzusammensetzung gemäß einem der vorstehenden Ansprüche, wobei der Copolyester ein Copolyetherester ist.

7. Stabilisierte Polyesterzusammensetzung gemäß einem der vorstehenden Ansprüche, wobei der Lichtstabilisator ein oligomeres gehindertes Amin, ein polymeres gehindertes Amin oder eine Kombination davon ist.

8. Stabilisierte Polyesterzusammensetzung gemäß Anspruch 7, wobei der Lichtstabilisator ein gehindertes Amin mit einem Zahlenmittel des Molekulargewichts von 1000 oder mehr umfasst.

9. Stabilisierte Polyesterzusammensetzung gemäß Anspruch 7, wobei der Lichtstabilisator ein oligomeres gehindertes Amin mit der folgenden Struktur ist: 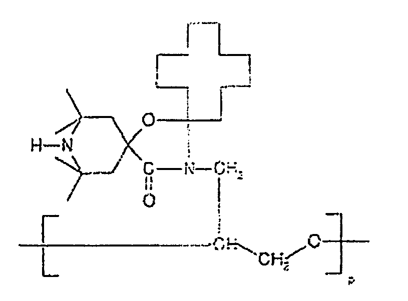 wobei p = 4 bis 30 ist.

10. Stabilisierte Polyesterzusammensetzung gemäß Anspruch 7, wobei der Lichtstabilisator ein oligomeres gehindertes Amin mit der folgenden Struktur ist: 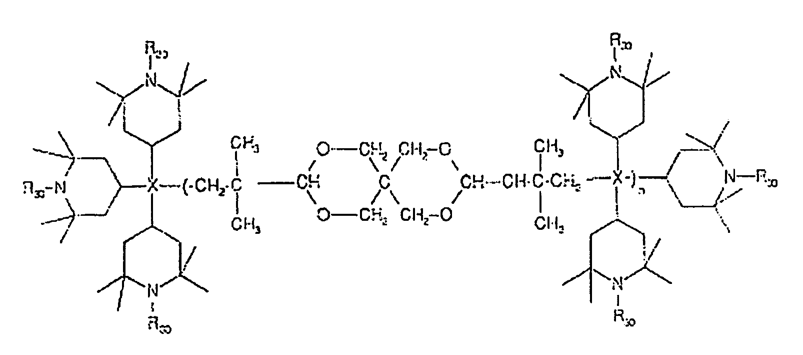 wobei n = 1 bis 4 ist und R₃₀ Wasserstoff oder CH₃ ist.

11. Stabilisierte Polyesterzusammensetzung gemäß Anspruch 1, die als Lichtstabilisator ein Benzotriazol und als Antioxidans ein sterisch gehindertes Phenol, das eine Triazinverbindung mit der folgenden Struktur umfasst, enthält: 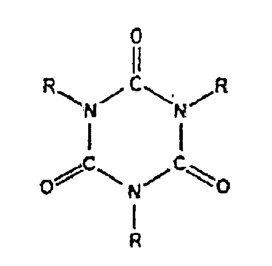 wobei R jeweils unabhängig eine phenolische Gruppe ist, die über ein C₁- bis C₅-Alkyl oder einen Estersubstituenten an den Ring gebunden sein kann.

12. Stabilisierte Polyesterzusammensetzung gemäß Anspruch 11, wobei R die folgende Struktur hat:

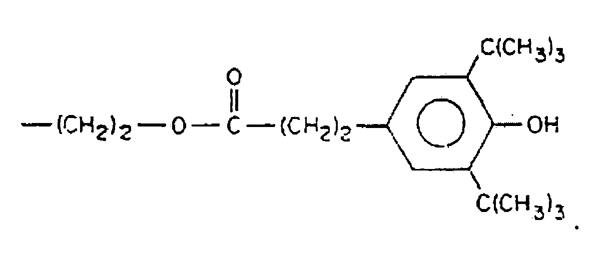

13. Stabilisierte Polyesterzusammensetzung gemäß Anspruch 12, wobei das Antioxidans weiterhin eine Organophosphorverbindung umfasst, wobei es sich bei dem Antioxidans um Aryldiphosphit, Aryldiphosphonit oder eine Kombination davon handelt.

14. Stabilisierte Polyesterzusammensetzung gemäß Anspruch 13, wobei es sich bei dem Antioxidans um Bis(2,4,6-tri-tert-butylphenyl)pentaerythritdiphosphit, Tetrakis(2,4-di-tert-butylphenyl)-4,4'-biphenylendiphosphonit oder eine Kombination davon handelt.

15. Film-, Folien-, Faser- oder Filamentartikel, gebildet aus der stabilisierten Polyesterzusammensetzung gemäß einem der vorstehenden Ansprüche, wobei der Artikel eine Reißdehnung nach Belichtung mit einem Xenonbogen mit 2000 kJ/m² gemäß dem Testverfahren SAE J1960 von 85% bis 150% der Reißdehnung des Artikels im unbelichteten Zustand aufweist.

## Revendications

1. Composition de polyester stabilisée, comprenant :
un copolyester thermoplastique ;
un stabilisant à la lumière ;
un antioxydant ;
une amine secondaire ; et
un lubrifiant comprenant un sel métallique d'un acide gras avec une longueur de chaîne de 22 à 38 atomes de carbone, dans laquelle le lubrifiant constitue de 0,5 % en poids à 10 % en poids de la composition.

2. Composition de polyester stabilisée selon la revendication 1, dans laquelle le sel métallique de l'acide gras est un sel de métal alcalin, un sel de métal alcalino-terreux ou une combinaison de ceux-ci, et ledit acide gras a une longueur de chaîne de 24 à 36 atomes de carbone.

3. Composition de polyester stabilisée selon la revendication 2, dans laquelle le sel métallique est un sel de sodium de l'acide montanique, un sel de calcium de l'acide montanique ou une combinaison de ceux-ci.

4. Composition de polyester stabilisée selon la revendication 1, dans laquelle le lubrifiant comprend en outre un ester d'acide gras, dans laquelle le rapport molaire du sel métallique à l'ester est 1 : 1 ou supérieur.

5. Composition de polyester stabilisée selon l'une quelconque des revendications précédentes, dans laquelle le lubrifiant constitue de 1 % en poids à 5 % en poids de la composition.

6. Composition de polyester stabilisée selon l'une quelconque des revendications précédentes, dans laquelle le copolyester est un copolyétherester.

7. Composition de polyester stabilisée selon l'une quelconque des revendications précédentes, dans laquelle le stabilisant à la lumière est une amine encombrée oligomérique, une amine encombrée polymérique ou une combinaison de ceux-ci.

8. Composition de polyester stabilisée selon la revendication 7, dans laquelle le stabilisant à la lumière comprend une amine encombrée ayant un poids moléculaire moyen en nombre de 1000 ou supérieur.

9. Composition de polyester stabilisée selon la revendication 7, dans laquelle le stabilisant à la lumière est une amine encombrée oligomérique ayant la structure suivante: 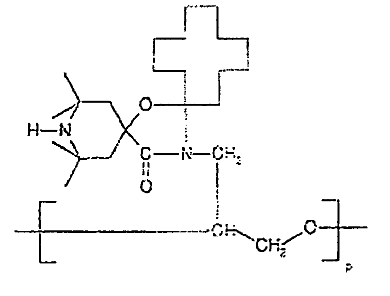 où p vaut de 4 à 30.

10. Composition de polyester stabilisée selon la revendication 7, dans laquelle le stabilisant à la lumière est une amine encombrée oligomérique ayant la structure suivante: 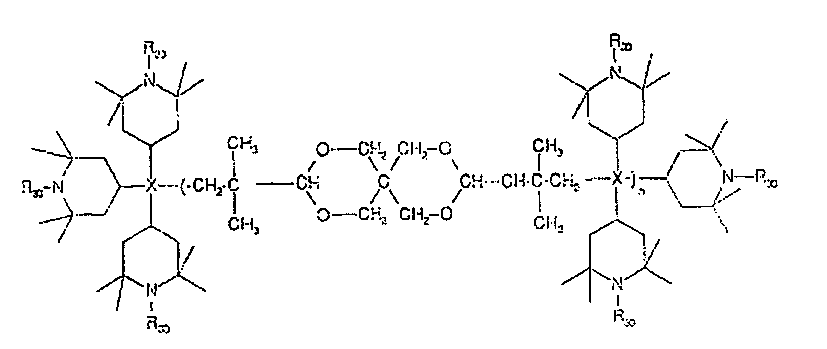 où n vaut de 1 à 4 et R₃₀ est hydrogène ou CH₃.

11. Composition de polyester stabilisée selon la revendication 1, contenant en tant que stabilisant à la lumière un benzotriazole et en tant qu'antioxydant un phénol stériquement encombré comprenant un composé triazine ayant la structure suivante: 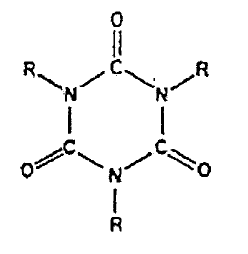 où chaque R est indépendamment un groupe phénolique, qui peut être attaché au cycle par l'intermédiaire d'un alkyle en C₁ à C₅ ou d'un substituant ester.

12. Composition de polyester stabilisée selon la revendication 11, dans laquelle R a la structure suivante:

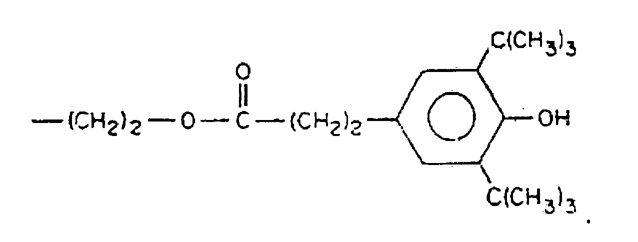

13. Composition de polyester stabilisée selon la revendication 12, dans laquelle l'antioxydant comprend en outre un composé organophosphoré, dans laquelle ledit antioxydant est un diphosphite d'aryle, un diphosphonite d'aryle ou une combinaison de ceux-ci.

14. Composition de polyester stabilisée selon la revendication 13, dans laquelle l'antioxydant comprend le diphosphite de bis(2,4-tri-tert-butyl-phényl)-pentaérythritol, le 4,4'-diphénylènediphosphonite de tétrakis(2,4-di-tert-butyl-phényle) ou une combinaison de ceux-ci.

15. Article en film, feuille, fibre ou filament formé à partir de la composition de polyester stabilisée selon l'une quelconque des revendications précédentes, dans laquelle l'article présente un allongement à la rupture après exposition à l'arc au xénon avec 2000 kJ/m² conformément à la méthode d'essai SAE J1960 de 85 % à 150 % de l'allongement à la rupture de l'article non exposé.
